# FASCICULE DE BREVET EUROPEEN

(11) **EP 1 397 851 B1**
(45) Date de publication et mention de la délivrance du brevet: **24.08.2005**
(21) Numéro de dépôt: 02751264.9
(22) Date de dépôt: 18.06.2002
(51) Int. Cl.: H01S 3/13

(54) **SOURCE LASER STABILISEE EN FREQUENCE**
FREQUENZSTABILISIERTE LASERQUELLE
FREQUENCY-STABILIZED LASER SOURCE

(30) Priorité: 18.06.2001 FR 0107974
(43) Date de publication de la demande: 17.03.2004
(73) Titulaire: UNIVERSITE DES SCIENCES ET TECHNOLOGIES DE LILLE, 59655 Villeneuve-d'Ascq Cedex (FR)
(72) Inventeur: ZEMMOURI, Jaouad, F-59510 Hem (FR); RAZDOBREEV, Igor, F-59155 Faches-Thumesnil (FR); RINGOT, Jean, F-59370 Mons-en-Baroeul (FR)
(74) Mandataire: Hennion, Jean-Claude
(86) Numéro de dépôt international: PCT/FR2002/002094
(87) Numéro de publication internationale: WO 2002/103861

(56) Documents cités:
- DE-A- 4 132 063
- US-A- 5 063 568
- US-A- 5 553 087
- SVELTO C ET AL: "Frequency stabilization of a novel 1.5- mu m Er-Yb bulk laser to a /sup 39/K sub-Doppler line at 770.1 nm" IEEE JOURNAL OF QUANTUM ELECTRONICS, APRIL 2001, IEEE, USA, vol. 37, no. 4, pages 505-510, XP002192397 ISSN: 0018-9197
- ITOH T ET AL: "Q-SWITCHING AND MODE SELECTION OF COUPLED-CAVITY ER, YB:GLASS LASERS" JAPANESE JOURNAL OF APPLIED PHYSICS, PUBLICATION OFFICE JAPANESE JOURNAL OF APPLIED PHYSICS. TOKYO, JP, vol. 36, no. 2B, 15 février 1997 (1997-02-15), pages L206-L208, XP000733111 ISSN: 0021-4922
- VERED MAHAL ET AL: "QUASI-PHASE-MATCHED FREQUENCY DOUBLING IN A WAVEGUIDE OF A 1560-NM DIODE LASER AND LOCKING TO THE RUBIDIUM D2 ABSORPTION LINES" OPTICS LETTERS, OPTICAL SOCIETY OF AMERICA, WASHINGTON, US, vol. 21, no. 16, 15 août 1996 (1996-08-15), pages 1217-1219, XP000623768 ISSN: 0146-9592

## Description

La présente invention concerne une source laser stabilisée en fréquence utilisant un laser solide et adaptée pour être utilisée comme étalon de fréquence en particulier dans le domaine des télécommunications.

L'extension très rapide des capacités des réseaux de télécommunication locaux de type LAN et des réseaux de télécommunication à plus grand distance de type WAN conduit à un besoin en bande passante de plus en plus important. Pour satisfaire ce besoin en bande passante des réseaux de télécommunication, une solution technique couramment mise en oeuvre à ce jour réside dans le développement de réseaux à multiplexage en longueur d'onde (WDM). Dans ce multiplexage en longueur d'onde, plusieurs signaux (ou canaux) sont transportés simultanément sur une fibre optique, mais à différentes longueurs d'onde.

La transmission optique multicanaux (WDM) pose deux difficultés majeures. La première réside dans la création et l'extraction de chaque canal à un coût raisonnable et sans perte d'information. La seconde difficulté est liée à l'amplification optique de l'ensemble des canaux sans distorsion et/ou perte d'information. Ces difficultés augmentent avec le nombre de canaux utilisés.

Une première solution technique couramment mise en oeuvre pour sélectionner les canaux (multiplexage ou démultiplexage) est une méthode passive de filtrage fréquentielle, basée sur l'utilisation de réseaux de Bragg. Actuellement, bien que la technologie des réseaux de Bragg soit assez bien maîtrisée, et ce à des coût raisonnables, certaines limitations physiques (stabilité dans le temps de la longueur d'onde de Bragg, sensibilité au milieu extérieurs notamment à la température,...) posent plusieurs problèmes, surtout lorsque la densité de canaux devient élevée.

Une seconde technique que l'on peut utiliser pour éviter les problèmes liés à l'utilisation des réseaux de Bragg est une méthode active de traitement de l'information, basée sur une détection hétérodyne. La mise en oeuvre de cette méthode impose cependant, pour discriminer de manière précise chaque canal, de disposer d'étalons en fréquence, sous la forme de sources lasers monomodes longitudinales, de très bonne pureté spectrale, de faible encombrement et intégrables dans des baies de télécommunication, qui sont parfaitement stabilisées en fréquence, dont les fréquences d'émission sont connues avec précision, et qui peuvent être placées sur les différents sites du réseau de télécommunication (à l'émission et à la réception). En pratique, compte-tenu des longueurs d'ondes utilisées aujourd'hui dans le domaine des télécommunications, ces sources laser étalons doivent permettre l'émission d'un faisceau de lumière cohérente à une longueur d'onde de 1,56µm. Plus la source étalon est précise, plus les longueurs d'onde des différents canaux peuvent être proches, ce qui permet d'augmenter de manière sensible la bande passante totale.

Actuellement, dans le domaine des télécommunications par fibres optiques, les sources laser les plus utilisées mettent en oeuvre comme moyen d'émission du faisceau lumineux, un laser de type semiconducteur, et plus particulièrement une diode laser. On peut trouver sur le marché une très vaste gamme de diodes lasers. Les avantages de ces diodes sont leur simplicité d'utilisation et leur compacité. En revanche un inconvénient de ces diodes laser est la mauvaise définition de longueur d'onde d'émission (fluctuation de la longueur d'onde dans le temps sous l'influence de paramètres extérieurs tels que la température, les déformations mécaniques, le vieillissement,...) qui fait que les diodes lasers possèdent un très bas niveau de qualité ou de finesse spectrale.

On a également déjà proposé récemment de réaliser une source laser utilisant un laser solide Erbium-Ytterbium, et stabilisée en fréquence autour de 1,5µm. Cette source laser est décrite dans l'article :
C, SVELTO et al.: « Frequency Stabilization of a Novel 1.5 Er-Yb Bulk Laser to a ³⁹K sub-Doppler Line at 770.1nm", IEEE journal of Quantum Electronics, avril 2001, IEEE, USA, Vol. 37, n°4, pages 505 -510.

La stabilisation en fréquence de la source laser décrite dans cet article est réalisée en asservissant la fréquence du faisceau laser sur une transition (T) d'un élément chimique d'absorption (en l'occurrence du Rubidium). Plus précisément, il est préconisé d'effectuer cet asservissement en mettant en oeuvre une détection synchrone basée sur une modulation de la fréquence du faisceau laser délivré par le laser solide (voir paragraphe V. WAVELENGTH-MODULATION SPECTROSOCOPY AND FREQUENCY-LOCKING EXPERIMENT). Il en résulte que la fréquence du faisceau laser délivré par le laser solide oscille en permanence et n'est donc pas parfaitement fixe. La source laser solide décrite, bien qu'étant stabilisée en fréquence, n'est néanmoins pas adaptée pour réaliser un étalon de fréquence du fait de la fluctuation permanente de sa fréquence.

Par ailleurs, on a déjà essayé, notamment dans le document US 5,553,087, de stabiliser en fréquence une diode laser par une application de l'effet Zeeman, c'est-à-dire par la modulation des transitions optiques des atomes d'un élément absorbant, dans une boucle d'asservissement avec rétroaction sur le courant de la diode laser. Outre les inconvénients mentionnés précédemment concernant ce type de laser (mauvaise définition de longueur d'onde d'émission, mauvaises qualités spectrales), qui les rendent totalement inadaptés à une utilisation en tant qu'étalon dans le domaine des télécommunications, ce type de stabilisation présente plusieurs inconvénients. L'élément absorbant n'étant pas saturé, il est impossible de se positionner correctement sur une raie d'absorption donnée et d'y rester. Il en résulte une variation permanente de la fréquence du faisceau laser émis, conduisant à une trop mauvaise précision de la stabilisation de la fréquence qui reste de l'ordre de plusieurs centaines de MHz.

L'objectif principal de la présente invention est de proposer, dans le domaine des lasers solides, une nouvelle source laser stabilisée en fréquence, présentant une finesse spectrale de l'ordre du MHz, et adaptée pour une utilisation comme étalon de fréquence.

Un autre objectif de l'invention est de proposer une nouvelle source laser stabilisée en fréquence, et adaptée pour une utilisation comme étalon de fréquence dans le domaine des télécommunications.

Un autre objectif de l'invention est de proposer une nouvelle source laser stabilisée en fréquence qui permet l'émission d'un rayonnement monomode transverse en sorte de faciliter le couplage de l'onde électromagnétique avec des fibres optiques et des guides d'ondes planaires.

Un autre objectif de l'invention est de proposer une nouvelle source laser stabilisée en fréquence qui permet l'émission d'un rayonnement monomode longitudinal et l'obtention d'une bonne finesse spectrale.

La solution de l'invention consiste à réaliser une source laser combinant les caractéristiques techniques de la revendication 1. La solution de l'invention est ainsi basée sur un asservissement de la fréquence du faisceau laser délivré par un laser solide sur une transition d'un élément chimique d'absorption, lequel asservissement combine avantageusement un fonctionnement en absorption saturée (saturation de ladite dite transition par le faisceau traversant l'élément chimique d'absorption) et une détection synchrone basée sur une modulation de ladite transition saturée. On obtient ainsi un faisceau laser mono-fréquence, dont la fréquence de sortie est fixe comparativement à la source laser précitée de Svelto et al., c'est-à-dire dont la fréquence n'est pas en permanence modulée, et dont la fréquence est beaucoup plus précise que celle qui serait obtenue avec un fonctionnement en absorption simple. La source laser est ainsi parfaitement adaptée pour réaliser un étalon de fréquence.

D'autres caractéristiques et avantages de l'invention apparaîtront plus clairement à la lecture de la description ci-après de deux variantes de réalisation de l'invention, laquelle description est donnée à titre d'exemple non limitatif, et en référence aux dessins annexés sur lesquels :
- la figure 1 est une représentation schématique d'une première variante de réalisation d'une source laser de l'invention,
- la figure 2 est une présentation schématique d'une seconde variante de réalisation d'une source laser de l'invention,
- la figure 3 représente les niveaux d'énergie des deux isotopes (85) et (87) du Rubidium (Rb),
- la figure 4 représente schématiquement une courbe théorique de l'intensité du faisceau ayant traversé la cellule d'absorption après un unique passage (absorption simple), dans l'hypothèse purement théorique où il n'y aurait pas d'élargissement du pic d'absorption par effet Doppler.
- la figure 5 représente schématiquement la courbe réelle de l'intensité du faisceau ayant traversé la cellule d'absorption après un unique passage (absorption simple), avec élargissement du pic d'absorption par effet Doppler,
- la figure 6 représente schématiquement la courbe réelle de l'intensité du faisceau traversant la cellule d'absorption, après deux passages successifs et avec saturation de la transition atomique utilisée pour l'asservissement.

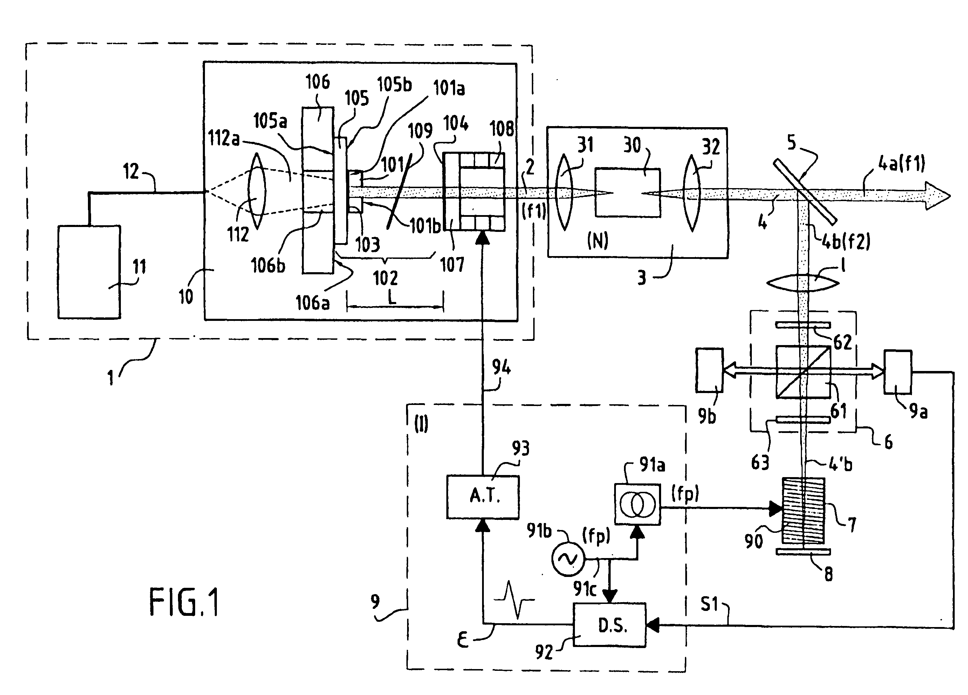

En référence à la figure 1, et conformément à une première variante de réalisation de l'invention, la source laser comprend :
- un ensemble 1 qui est formée par un laser solide miniature 10 polarisé, pompé optiquement par une diode de pompe 11 via une fibre optique courte 12, et qui délivre en sortie un premier faisceau laser 2 de fréquence (f1) ;
- un générateur 3 de N^{ième} harmonique, qui permet de générer, à partir dudit premier faisceau laser 2, un faisceau lumineux 4 composé d'un second faisceau laser 4a de même fréquence (f1) et d'un faisceau lumineux 4b, dit N^{ième} harmonique, dont la fréquence (f2) est égale à (N) fois la fréquence (f1) du faisceau laser 2 (N étant un entier supérieur ou égal à 2) ;
- une cellule d'absorption 7 contenant un élément chimique d'absorption, qui dans l'exemple particulier décrit ci-après est un gaz (ou une vapeur) de Rubidium (Rb) ;
- un miroir dichroïque 5 (ou tout autre moyen optique équivalent connu remplissant la même fonction) qui d'une manière générale a pour fonction de séparer les faisceaux précités 4a et 4b, en laissant passer le second faisceau laser 4a de fréquence (f1) pour former le faisceau laser de sortie, et en déviant le faisceau lumineux 4b (N^{ième} harmonique) pour le diriger vers la cellule d'absorption 7 en sorte de le faire passer à travers l'élément chimique d'absorption de cette cellule 7 ;
- des moyens 6 de polarisation du faisceau laser, interposés entre la cellule d'absorption 7 et le miroir dichroïque 5 ;
- une lentille de focalisation (l) interposée entre le miroir dichroïque 5 et les moyens de polarisation 6 ; cette lentille (l) permet de réduire la taille du faisceau 4b et par là-même d'augmenter sa densité de puissance ; l'utilisation de cette lentille n'est pas nécessaire lorsque le faisceau 4b présente une puissance suffisante ;
- un miroir 8 (ou tout autre moyen optique réflectif équivalent remplissant la même fonction) qui a pour fonction de retourner (déflection à 180°) le faisceau lumineux 4"b issu de la cellule d'absorption 7 en direction de ladite cellule d'absorption, en sorte de lui faire traverser la cellule d'absorption, une seconde fois et selon le même chemin optique, ce qui permet un fonctionnement en absorption saturée ;
- et des moyens d'asservissement 9 qui sont conçus pour asservir de manière précise la fréquence (f1) du premier faisceau 2 sur une transition de l'élément chimique d'absorption (Rubidium).

Le laser solide 10 et le générateur 3 sont conçus de telle sorte que la puissance de la N^{ième} harmonique en sortie du générateur 3 est suffisante pour obtenir une saturation de ladite transition de l'élément chimique d'absorption, c'est-à-dire une saturation de l'absorption du Rubidium dans le cas de l'éxémple particulier qui va à présent être détaillé.

### Ensemble 1 : Laser solide 10 - fibre optique 11 - diode de pompe 12

Le laser solide 10 comprend un élément en matériau actif 101 destiné à être pompé optiquement, et se présentant plus particulièrement sous la forme d'un barreau de verre de très faible épaisseur (1mm environ, dimension selon la longueur de la cavité), qui est co-dopé en Ytterbium et Erbium. L'ion Erbium inséré dans une matrice vitreuse permet, par pompage optique à une longueur d'onde de pompe (λₚ) de l'ordre de 975nm , une émission laser par le barreau de verre 101 à une longueur d'onde (λ) comprise dans la bande spectrale 1,5µm et 1,6µm.

L'invention n'est toutefois pas limitée à l'utilisation d'un barreau de verre co-dopé Ytterbium et Erbium, le laser solide pouvant d'une manière plus générale être réalisé à partir d'un élément en matériau actif dopé. Il pourrait notamment s'agir d'un cristal (au lieu d'une matrice vitreuse), pouvant plus particulièrement être semiconducteur.

Le barreau 101 est positionné dans une cavité laser 102 formant un interféromètre de Fabry-Perrot. Ce barreau 101 comporte deux faces planes opposées 101a et 101b, qui sont parallèles et orientées perpendiculairement à l'axe longitudinal de la cavité 101. La cavité 102 est délimitée par deux miroirs 103, 104. Selon une caractéristique préférentielle, le miroir d'entrée est un miroir dichroïque. En outre pour réduire l'encombrement, ce miroir d'entrée 103 est déposé directement sur la face 101a du barreau 101, et forme un miroir plan.

A l'opposé du miroir d'entrée 103, le miroir de sortie 104 est un miroir plan, de telle sorte que la cavité 102 est une cavité de type plan-plan. La longueur L de cette cavité 102, qui correspond à la distance entre les deux miroirs 103 et 104 selon l'axe optique longitudinal de la cavité, est réglable de manière fine, en sorte de régler la longueur de la cavité, et par là-même de permettre un réglage fin de la fréquence d'émission (f1) du laser solide 1. Ce réglage fin est obtenu au moyen d'une cale piézo-électrique 108 sur laquelle est monté le miroir de sortie 104, de préférence (mais non nécessairement) par l'intermédiaire d'un élément coupleur 107 (par exemple substrat en verre), et en agissant sur la tension de commande la cale piézoélectrique 108. Cette tension de commande est contrôlée automatiquement, par une boucle de rétroaction qui est décrite ultérieurement, et qui d'une manière générale permet un asservissement de la longueur d'onde d'émission λ1 (λ1 = c/f1, c étant la vitesse de la lumière) du laser solide 10, sur une transition (désignée ci-après d'une manière générale transition (T)) de l'élément chimique d'absorption de la cellule 7, lequel élément chimique est choisi de telle sorte que cette longueur d'onde d'émission λ1 est stabilisée autour de 1,56µm.

L'utilisation d'une cavité 102 de type plan-plan et de faible longueur permet avantageusement d'obtenir en sortie du laser solide 10 un rayonnement en régimes monomode transverse et longitudinal, de très bonne qualité.

L'ensemble miroir d'entrée 103 - barreau 101 forme la face d'entrée de la cavité 102, et est monté pour son refroidissement, sur une première face 105a d'une fenêtre en saphir 105. La fenêtre en saphir 105, qui est en contact avec le miroir d'entrée 103, a pour fonction de dissiper l'énergie thermique accumulée par le barreau de verre 101 lors du fonctionnement du laser solide 10. Cette fenêtre en saphir pourrait être remplacée dans une autre variante par tout élément dans un matériau, qui est transparent pour le faisceau de pompe de la diode de pompe 11, et qui présente un coefficient de conductivité thermique supérieur à celui du barreau 101 en sorte de dissiper l'énergie thermique engendrée dans ce barreau 101 en cours de pompage. Plus le coefficient de conductivité thermique de la fenêtre 105 est élevé, meilleur est le refroidissement du barreau 101. A titre d'exemple, dans une autre variante mettant en oeuvre un barreau 101 en verre, et une longueur d'onde de pompe d'environ 975nm, on pourrait remplacer la fenêtre en saphir, par une fenêtre en AIN.

La fenêtre en saphir est montée sur l'une 106a des faces d'un radiateur 106, présentant en son centre une ouverture traversante 106b, qui permet le passage du faisceau de pompe jusqu'à l'ensemble fenêtre en saphir 105 - miroir 103 - barreau 101, la seconde face 105b de la fenêtre 105 venant fermer cette ouverture 106b. Ce radiateur 106, qui est en contact avec la fenêtre 105, a pour fonction d'évacuer vers l'extérieur l'énergie thermique qui est absorbée par la fenêtre en saphir 105 en cours de pompage, et présente à cet effet une surface de dissipation importante (comparativement à la surface de la fenêtre 105). Ce radiateur 106 est par exemple en cuivre ou en aluminium. Il pourrait également s'agir d'un élément Peltier permettant d'absorber activement l'énergie thermique de la fenêtre 105.

La mise en oeuvre en combinaison du radiateur 106 et de la fenêtre 105 permet avantageusement de rendre stable la cavité plan-plan 102, par un refroidissement efficace de l'ensemble miroir d'entrée 103 - barreau de verre 101. En effet, en l'absence de refroidissement de l'ensemble le miroir d'entrée 103 - barreau 101, ou si le refroidissement de cet ensemble n'est pas assez efficace, en cours de fonctionnement du laser, sous l'action du faisceau de pompe, il se produit une déformation et une dilatation de l'ensemble miroir d'entrée 103 - barreau 101, lequel ensemble devient assimilable à une lentille (effet de lentille thermique). Cette lentille associée à un miroir de sortie plan 104 forme dans ce cas une cavité instable, ce qui rend le laser inopérant. De plus, un refroidissement inefficace peut aboutir à une destruction du barreau 101.

En amont de l'ensemble radiateur 106 - fenêtre en saphir 105 - miroir d'entrée 103 - barreau de verre 101 est montée une lentille de focalisation 112, qui est centrée sur l'axe optique de la cavité.

Le laser solide 1 comprend également de manière usuelle un étalon rotatif 109 (lame mince), qui est positionné dans la cavité 102, en étant centré sur l'axe optique de cette cavité, et qui permet un premier réglage grossier de la fréquence d'émission du laser solide 10, par un réglage de la position angulaire initiale de l'étalon 109.

Pour stabiliser la polarisation du rayonnement en sortie du laser solide 10, lorsque le matériau actif (barreau 101) est isotrope, tel que le verre co-dopé en Ytterbium et Erbium, l'étalon 109 est réalisé dans un matériau à pouvoir polarisant, tel que par exemple le matériau commercialisé sous la marque déposée « POLARCOR ». En revanche, si le matériau actif est anisotrope, l'étalon 109 peut être réalisé dans un matériau isotrope, tel que par exemple le verre.

La diode de pompe 11 permet un pompage optique du laser solide à travers le miroir d'entrée 103. Dans un exemple particulier de réalisation, on utilise une diode laser multimodes de puissance inférieure à 1W. Plus particulièrement, pour le pompage du verre co-dopé Ytterbium - Erbium 101, on utilise par exemple une diode à semiconducteur GaInAsP qui permet d'obtenir une longueur d'onde de pompe (λₚ) de l'ordre de 975nm .

L'utilisation d'un milieu actif réalisé au moyen d'un verre (ou cristal) co-dopé en Ytterbium et Erbium, combinée avec un refroidissement de ce milieu actif par la face d'entrée (miroir dichroïque 103 associé à la fenêtre 105 et au radiateur de dissipation 106) et avec l'utilisation d'une cavité 102 de type plan-plan permet avantageusement d'obtenir, à faible coût, un laser solide 10 qui présente un encombrement faible et qui est capable d'émettre en sortie un faisceau laser 2 de longueur d'onde λ1 (λ1 = c/f1) régulée à 1,56µm, et présentant une puissance suffisante en régimes monomode transverse et monomode longitudinal.

### Générateur (3) d'harmonique

Le générateur 3 comprend deux lentilles de focalisation 31 et 32 entre lesquelles est placé un cristal non linéaire 30 à base de cristaux (PP : KTiOPO₄) permettant d'obtenir un quasi-accord de phase. D'une manière générale, ce cristal (PP : KTiOPO₄) pourrait être remplacé par tout cristal connu équivalent remplissant la même fonction, et par exemple par un cristal à base de KNbO₃. Le générateur 3 permet à partir du premier faisceau 2 en entrée de générer en sortie une seconde harmonique (N=2) dont la fréquence (f2) est le double de la fréquence du premier faisceau 2, laquelle seconde harmonique est déviée par le miroir dichroïque 5 en direction de la cellule d'absorption 7 (faisceau 4b). L'utilisation d'un cristal 30 de type (PP :KTP) permet avantageusement d'obtenir une puissance de seconde harmonique plus importante comparativement par exemple à l'utilisation d'un monocristal de type KNbO₃.

### Moyens de polarisation 6 et Cellule d'absorption 7

Les moyens de polarisation 6 comportent successivement et alignés selon le même axe optique : une lame demi-onde 62, un cube polariseur 61, et une lame quart-d'onde 63. En fonctionnement, le faisceau entrant 4b de fréquence (f2) correspondant à la seconde harmonique générée par le cristal 30 est envoyé sur le cube polariseur 61. La lame demi-onde 62 permet de diriger une très faible partie de la puissance de ce faisceau entrant 4b en direction d'une première photodiode 9a. L'essentiel de la puissance de ce faisceau entrant 4b traverse une première fois le cube polariseur 61, puis passe par la lame quart-d'onde 63. Cette lame rend circulaire (droite ou gauche) la polarisation du faisceau issu du cube polariseur 61. Le faisceau 4'b polarisé circulairement traverse la cellule d'absorption 7, est réfléchi à 180° par le miroir 8, puis retraverse, en sens inverse, successivement la cellule d'absorption 7 et la lame quart d'onde 63. Du fait de sa polarisation circulaire, ce faisceau retour est réfléchi par le cube polariseur 61 en direction d'une seconde photodiode 9b, positionnée à l'opposée de la première photodiode 9a.

### Asservissement par absorption saturée

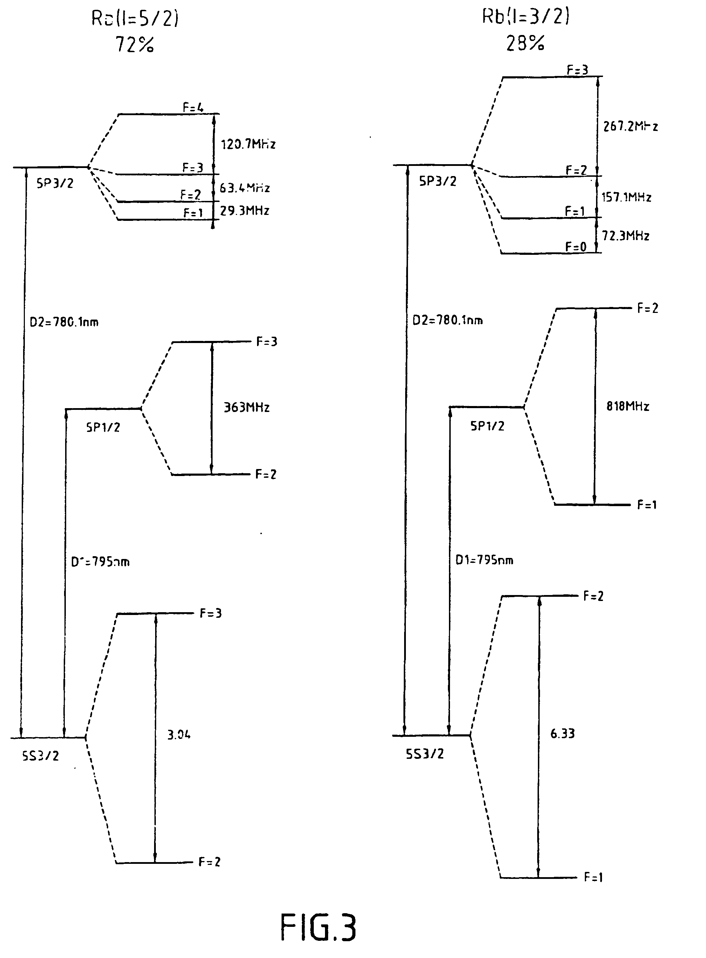

La figure 3 représente les niveaux d'énergie du Rubidium (Rb) 85 et 87. Pour réaliser l'asservissement de la fréquence (f1) du faisceau laser (2) on utilise par exemple comme transition (T), la transition D₂ (5S_{1/2}/F=2 → 5P_{3/2}/F =3) du Rubidium (Rb) à 0,7801µm. Cette transition D₂ couple les niveaux 5S_{1/2} (niveau fondamental) et 5P_{3/2} (niveau excité, durée de vie 0,15µs) qui possèdent avantageusement une structure fine. D'autres transitions atomiques du Rubidium pourraient également être utilisées pour réaliser l'asservissement.

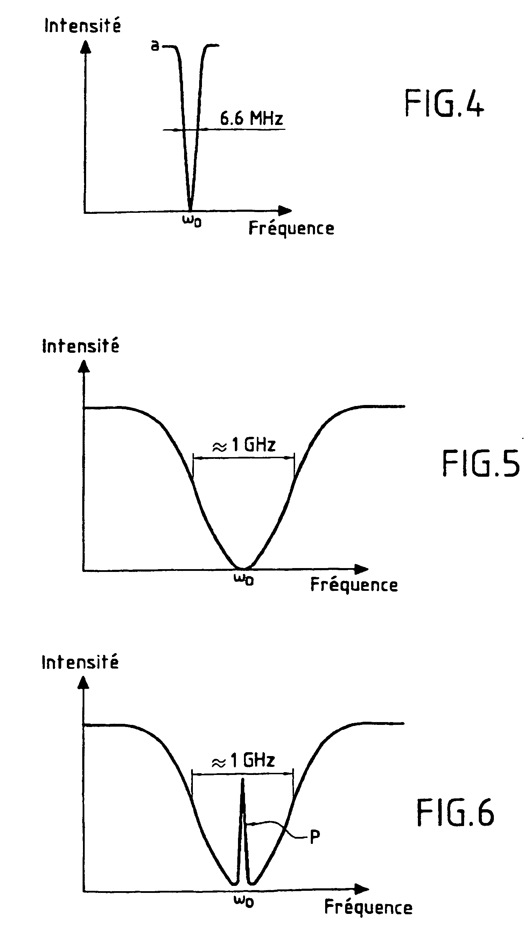

Lorsque la pulsation (w_{L} du faisceau 4b traversant la cellule 7 de Rubidium est proche de la pulsation (w₀) de la transition atomique (T) choisie, l'atome absorbe une partie de l'intensité du faisceau 4b (voir figure 4). Cette absorption d'énergie est importante lorsque la fréquence du faisceau 4b n'est pas éloignée de plus d'une fois la largeur du niveau excité. Le déplacement des atomes du gaz de Rubidium provoque cependant, par effet Doppler, un élargissement de la largeur de la transition (T). Ainsi en cas d'absorption simple (faisceau 4b traversant une seule fois la cellule d'absorption 7), on obtient en réalité une courbe d'absorption du type de celle de la figure 5. Ainsi, en cas d'absorption simple le pic d'absorption (figure 5) est en pratique trop large pour permettre un asservissement qui soit suffisamment précis à quelques MHz près.

L'absorption saturée permet de pallier au problème précité d'élargissement du pic d'absorption par effet Doppler. En effet, le faisceau retour, qui est renvoyé par le miroir 8 dans l'exemple de la figure 1, en retraversant la cellule d'absorption 7, permet de réaliser une inversion de population, ce qui rend le milieu (gaz Rb) transparent pour les atomes de vitesse nulle. Dans ce cas, si l'intensité du faisceau 4b est suffisante pour saturer la transition (T), le signal électrique, en fonction de la fréquence du laser, renvoyé par la photodiode 9b présente l'allure qui est donnée sur la figure 6, et qui se caractérise par un pic (P) de très faible largeur centré sur la pulsation (wₒ) de la transition atomique (T) choisie. Ce pic P permet ainsi avantageusement de réaliser un asservissement nettement plus précis qu'en cas d'absorption simple.

On comprend à la lumière de l'explication ci-dessus, que pour obtenir un fonctionnement en absorption saturée, il est important que la puissance de la Nième harmonique (seconde harmonique, faisceau 4b dans l'exemple de la figure 1) qui est utilisée pour l'asservissement soit suffisante pour saturer la transition choisie et obtenir sur le photodétecteur 9b un signal conforme à la figure 6.

### Moyens d'asservissement 9 et modulation de la transition atomique

Les moyens d'asservissement 9 permettent de réaliser l'asservissement de la fréquence du faisceau laser 2 par détection synchrone, grâce à une modulation de la transition atomique (T) saturée.

Ces moyens d'asservissement 9 comportent un solénoïde 90 qui entoure la cellule d'absorption 7, et une boucle de rétroaction (I). Cette boucle de rétroaction (I) comprend essentiellement un générateur de courant sinusoïdal 91a, un oscillateur 91b, un module de détection synchrone 92, et un amplificateur de tension 93.

Le générateur de courant sinusoïdal 91a délivre un courant sinusoïdal de fréquence prédéterminée (fp), qui alimente le solénoïde 90. La fréquence de ce courant est fixée par l'oscillateur 91b (signal 91c), et est par exemple de l'ordre de quelques dizaines de kHz. En fonctionnement, la cellule d'absorption est ainsi soumise à un champ magnétique modulé en amplitude, créé par le solénoïde 90. Ce champ magnétique modulé permet de déplacer les sous-niveaux Zeeman de la transition (T) (par exemple la transition atomique D₂ dans le cas du Rubidium). Ce déplacement est dans une large mesure proportionnel notamment à la valeur du champ magnétique créé. Il en résulte que le signal d'absorption S1 (délivré par le photodétecteur 9a) est modulé en permanence en fréquence sur une très faible plage (typiquement pour déplacer les niveaux d'énergie sur quelques MHz).

Le signal d'absorption S1 est traité par le module de détection synchrone 92. Ce module 92 reçoit également en entrée le signal 91c de fréquence (fp) délivré par l'oscillateur 91b, et permet de manière connue en soi d'extraire du signal d'absorption S1 un signal d'erreur (ε), sous la forme d'une tension continue dont la valeur est proportionnelle au décalage de fréquence entre la fréquence du faisceau 4b traversant la cellule d'absorption 7 et la fréquence de la transition (T) choisie. Le signal d'erreur (ε) est amplifié par un amplificateur de tension 93, qui délivre à destination de la cale piézoélectrique 108 un signal de commande 94 (tension continue). Ce signal de commande 94 permet d'ajuster en permanence et de manière fine la longueur de la cavité du laser solide (distance entre les miroirs d'entrée 103 et de sortie 104) et par là-même la fréquence d'émission f1 du laser solide 10.

La source laser de l'invention dont une variante particulière de réalisation a été décrite en référence à la figure 1 permet avantageusement de réaliser un étalon en fréquence qui présente les caractéristiques et avantages suivants :
- émission d'un rayonnement monomode transverse (faisceau 4a), ce qui permet de faciliter le couplage de l'onde électromagnétique avec des fibres optiques et des guides d'ondes planaires,
- émission d'un rayonnement monomode longitudinal (faisceau 4a), ce qui permet d'obtenir une bonne finesse spectrale ,
- très bonne stabilité en fréquence et en puissance du faisceau de sortie 4a,
- fréquence d'émission (f1) connue de manière absolue, ce qui permet d'utiliser le faisceau 4a dans des techniques de multiplexage/ démultiplexage actives,
- longueur d'onde d'émission (λ1) stabilisée autour de 1,56µm, ce qui permet son utilisation comme étalon de fréquence dans le domaine des télécommunications,
- source laser compacte et de faible encombrement, ce qui permet de l'insérer facilement dans des systèmes embarqués et dans des chaînes de traitement dans le domaine des télécommunication.

A titre indicatif, dans une réalisation conforme à l'exemple de la figure 1 qui vient d'être décrit, le laser solide 10 était conçu de telle sorte que le faisceau laser 2 gériéré par ce laser solide était stabilisée autour de 1,56µm avec une précision de +/- 10⁻⁸, et présentait une puissance de sortie (puissance du faisceau 4a) supérieure ou égale à 50mW en régimes monomode transverse et monomode longitudinal, cette puissance pouvant atteindre 100mW. La longueur L de la cavité valait environ 5mm. Les longueur, largeur et hauteur du laser solide 10 valaient respectivement 50mm, 30mm et 30mm. Le faisceau laser 2 en sortie du laser solide 10 présentait une très bonne qualité transverse, et était de ce fait facile à coupler avec une fibre optique. En particulier, le paramètre M² qui définit la qualité transverse de ce faisceau était inférieur à 1,1. La seconde harmonique (faisceau 4b) générée par le générateur 3 à partir de ce faisceau laser 2 présentait une puissance supérieure à 1µW, ce qui était suffisant pour saturer la transition (5S_{1/2}/F=2 → 5P_{3/2}/F =3) du Rubidium de la cellule d'absorption 7.

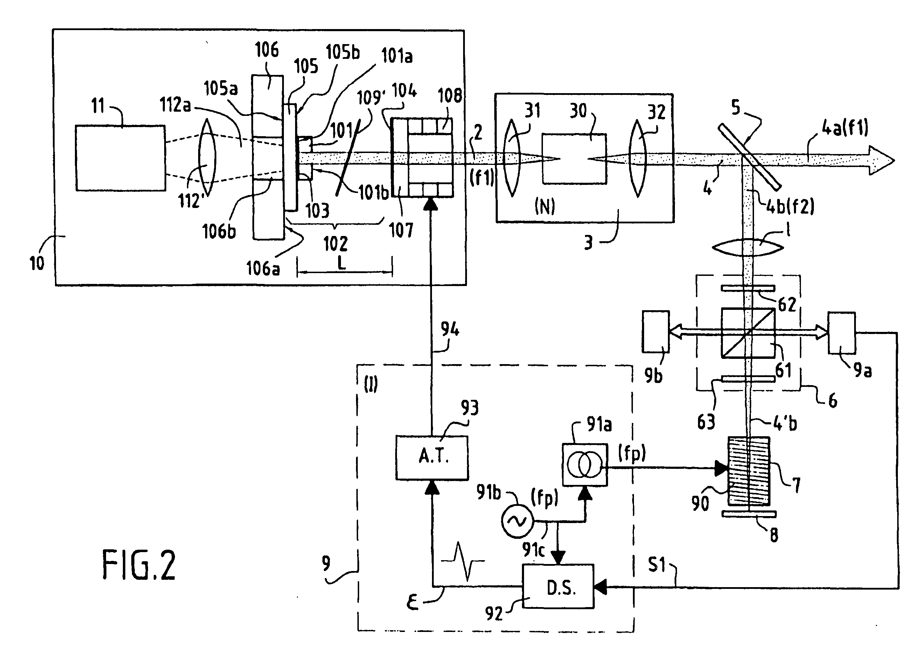

### Variante de réalisation de la figure 2

Dans cette variante, la diode de pompe 11 n'est pas fibrée (contrairement à la diode de pompe de la figure 1 qui est couplée en sortie à une fibre optique 12), mais est couplée directement au miroir d'entrée 103 de la cavité laser 102 du laser solide via une optique de focalisation (lentille 112'), sans mise en oeuvre d'une fibre optique. Egalement, l'étalon 109 de la variante de la figure 1 a été remplacé dans la variante de la figure 2, par une lame étalon 109' réalisée dans un matériau qui n'a pas de pouvoir polarisant, tel que par exemple du verre.

La diode de pompe 11 produit un faisceau de pompe multimode 112a qui de manière usuelle est polarisé et présente un profil dissymétrique dans le plan transversal à la direction de propagation du faisceau. La dissymétrie de ce profil du faisceau de pompe n'est pas modifiée par la lentille 112'. En sortie, le laser solide 10 délivre un faisceau laser 2 qui est polarisé, sans qu'il soit nécessaire de mettre en oeuvre dans la cavité laser 101 un élément de polarisation. La polarisation du faisceau laser 2 dans le cas de la variante de la figure 2 peut s'expliquer par la combinaison de deux effets :
- la distribution spatiale dissymétrique du faisceau de pompe 112a induit une biréfringence liée à l'effet thermo-optique ;
- le couplage du champ électromagnétique du faisceau de pompe 112a avec celui du rayonnement produit à l'intérieur de la cavité 102, via une interaction non linéaire générée au sein du matériau actif 101.

Comparativement, dans le cas de la variante de la figure 1, la mise en oeuvre de la fibre 12 rend le faisceau de pompe 112a dépolarisé et symétrique dans le plan transversal à la direction de propagation du faisceau. Du fait de cette symétrie spatiale du faisceau de pompe, pour obtenir en sortie de la cavité 102 du laser solide un faisceau 2 laser qui est polarisé, il est nécessaire de mettre en oeuvre dans ladite cavité un élément de polarisation 109.

Tel que cela ressort de la description ci-dessus, la variante de la figure 2 se caractérise par la mise en oeuvre d'un système de pompe (11, 112') conçu pour produire un faisceau de pompe 112a polarisé qui présente un profil dissymétrique dans le plan transversal à la direction de propagation du faisceau, le faisceau laser 2 issue de la cavité 102 étant polarisé, sans mise en oeuvre dans la cavité 102 d'un élément de polarisation. Ces caractéristiques techniques peuvent avantageusement être mise en oeuvre pour réaliser dans une autre variante un laser solide ne comportant pas de moyen de refroidissement (105,106) de l'ensemble miroir d'entrée 103 - élément en matériau actif 101.

L'invention n'est pas limitée aux deux variantes de réalisation qui ont été décrites à titre d'exemples en référence aux figures 1 et 2. En particulier, et de manière non exhaustive, en remplacement du Rubidium, on pourrait également utiliser tous les alcalins connus, et notamment le Potassium, Césium, Hydrogène, Sodium, Lithium,... Plus généralement, on peut utiliser tout élément ou composé chimique présentant des raies d'absorption différenciées, et adapté à la mise en oeuvre d'un asservissement selon la variante de la figure 1 ou 2 (modulation de la transition atomique). L'invention peut d'une manière plus générale être appliquée à la réalisation d'une source laser stabilisée autour d'une longueur d'onde (λ1) quelconque prédéterminée, pouvant être différente de la valeur 1,56µm, qui est à ce jour spécifique du domaine des télécommunications. Dans le cadre de l'invention, la source laser pourra être réalisée au moyen d'un laser solide (« solid state laser ») pompé optiquement qui peut être différent du laser solide 10 particulier de la figure 1 ou de la figure 2, c'est-à-dire d'une manière plus générale au moyen d'un laser mettant en oeuvre dans une cavité, un élément en matériau actif cristallin ou amorphe. Enfin, les lasers solides 10 décrits en référence à la figure 1 et à la figure 2, à titre de variante préférées de réalisation étant nouveaux, il peuvent avantageusement être utilisés pour réaliser tout type de source laser, et leur utilisation n'est pas nécessairement limitée à la réalisation d'une source laser stabilisée en fréquence selon l'invention.

## Revendications

1. Source laser stabilisée en fréquence **caractérisée en ce qu'**elle comprend :
- un laser solide (10) pompé optiquement et permettant l'émission d'un premier faisceau laser (2) de fréquence (f1),
- une cellule d'absorption (7) qui contient un élément chimique d'absorption, et qui en fonctionnement est traversée par le premier faisceau laser (2) ou par un faisceau (4b) qui en est dérivé de telle sorte qu'une transition (T) de l'élément chimique d'absorption est saturée,
- des moyens d'asservissement (9), qui sont conçus pour asservir la fréquence (f1) du premier faisceau laser sur ladite transition (T) saturée de l'élément chimique d'absorption, au moyen d'une détection synchrone basée sur une modulation de ladite transition (T),
- lesdits moyens (9) d'asservissement comportant un solénoïde (90), qui entoure la cellule d'absorption (7), et qui est alimenté en sorte de créer un champ magnétique modulé en amplitude, et permettant au signal d'absorption généré par ledit élément chimique d'absorption d'être modulé en permanence sur la plage de déplacement des sous-niveaux d'énergie dudit élément chimique d'absorption,
afin que le faisceau laser ainsi émis ne comporte qu'une seule composante spectrale, avec une précision de stabilisation n'excédant pas 2 MHz.

2. Source laser selon la revendication 1 ou 2 **caractérisée en ce qu'**elle comprend des moyens de déflection optique (8) qui permettent de faire passer le faisceau traversant la cellule d'absorption (7) au moins deux fois de suite à travers ladite cellule d'absorption.

3. Source laser selon l'une des revendications 1 à 3 **caractérisée en ce qu'**elle comprend un générateur (3) qui permet de générer, à partir du premier faisceau laser délivré par le laser solide, un deuxième faisceau laser (4b), dit N^{ième} harmonique, dont la fréquence est égale à N fois la fréquence (f1) du premier faisceau laser, N étant un entier supérieur ou égal à 2, la cellule d'absorption (7) étant prévue pour être traversée par ladite N^{ième} harmonique.

4. Source laser selon la revendication 4 **caractérisée en ce que** le générateur d'harmonique (3) comporte un cristal (30) non linéaire à base de cristaux PP :KTP.

5. Source laser selon l'une des revendications 1 à 5 **caractérisée en ce que** le laser solide (10) comporte une cavité (102) qui est délimitée par un miroir d'entrée (101) et un miroir de sortie (102), et à l'intérieur de laquelle est positionné un élément en matériau actif (101) destiné à être pompé optiquement, et **en ce que** la longueur de la cavité (102) est réglable au moyen d'un élément (108) qui est commandé par les moyens d'asservissement (9).

6. Source laser selon la revendication 6 **caractérisée en ce que** l'élément (108) de réglage de la longueur de la cavité (102) est une cale piézoélectrique (108).

7. Source laser selon l'une des revendications 1 à 7 **caractérisée en ce que** le laser solide (10) comportant une cavité (102) qui est délimitée par un miroir d'entrée (103) et un miroir de sortie (104), et à l'intérieur de laquelle est positionné un élément en matériau actif (101) destiné à être pompé optiquement, le miroir d'entrée (103) de ladite cavité (102) est déposé sur l'une des faces dudit élément actif (101), et forme avec le miroir de sortie (104) une cavité plan-plan, et **en ce que** le laser solide (10) comprend des moyens de refroidissement de l'ensemble miroir d'entrée - élément en matériau actif, lesquels moyens de refroidissement permettent de rendre stable la cavité plan-plan.

8. Source laser selon la revendication 8 **caractérisée en ce que** les moyens de refroidissement comportent une fenêtre (105) qui est au contact du miroir d'entrée (103), et qui est réalisée dans un matériau transparent à la longueur d'onde de pompe, et présentant une conductivité thermique supérieure à la conductivité thermique de l'élément actif (101), en sorte de permettre un dissipation de l'énergie thermique engendrée dans l'élément en matériau actif (101) en cours de pompage.

9. Source laser selon la revendication 9 **caractérisée en ce que** la fenêtre (105) est en saphir ou AIN.

10. Source laser selon la revendication 9 ou 10 **caractérisée en ce que** les moyens de refroidissement comportent un radiateur (106), qui est au contact de la fenêtre (105) et qui permet d'évacuer vers l'extérieur l'énergie thermique absorbée par cette fenêtre (105) en cours de pompage.

11. Source laser selon l'une des revendications 1 à 11 **caractérisée en ce que** le laser solide (10) comporte une cavité (102), qui est délimitée par un miroir d'entrée (103) et un miroir de sortie (104), et à l'intérieur de laquelle est positionné un élément en matériau actif (101) destiné à être pompé optiquement, et un système de pompe (11, 112') conçu pour produire un faisceau de pompe (112a) qui est polarisé et qui présente un profil dissymétrique dans le plan transversal à la direction de propagation du faisceau, le faisceau laser (2) issue de la cavité (102) étant polarisé, sans mise en oeuvre dans la cavité (102) d'un élément de polarisation.

12. Source laser selon l'une des revendications 1 à 12 **caractérisée en que** le laser solide (10) comportant un élément en matériau actif (101) destiné à être pompé optiquement, ledit élément actif (101) est un verre ou un cristal co-dopé en ions Ytterbium - Erbium.

13. Source laser selon l'une des revendication 1 à 13 **caractérisée en ce que** le laser solide (10) permet l'émission d'un premier faisceau laser (2) monomode transverse et monomode longitudinal.

14. Source laser selon la revendication 14 **caractérisée en ce que** la puissance du premier faisceau laser (2) est supérieure ou égale à 50mW.

15. Source laser selon l'une revendications 1 à 15 **caractérisée en ce que** la longueur d'onde (λ1) du premier faisceau laser (2) est stabilisée autour de 1,56µm.

16. Source laser selon l'une des revendications 1 à 16 **caractérisée en ce que** l'élément chimique d'absorption est choisi parmi le groupe : Rubidium, Potassium, Césium, Hydrogène, Sodium, Lithium.

## Patentansprüche

1. Frequenzstabilisierte Laserquelle, **dadurch gekennzeichnet, daß** sie umfaßt:
- einen optisch gepumpten Festkörperlaser (10), der das Aussenden eines ersten Laserbündels (2) der Frequenz (f1) ermöglicht,
- eine Absorptionszelle (7), die ein chemisches Absorptionselement enthält und die im Betrieb durch das erste Laserbündel (2) oder durch ein Laserbündel (4b) durchquert wird, das davon abgeleitet ist, so daß ein Übergang (T) des chemischen Absorptionselementes gesättigt ist,
- Regelungsmittel (9), die ausgelegt sind, um die Frequenz (f1) des ersten Laserbündels auf dem gesättigten Übergang (T) des chemischen Absorptionselements zu regeln, mit Hilfe einer synchronen Erfassung, die auf einer Modulierung des Übergangs (T) beruht,
- wobei die Regelungsmittel (9) einen Elektromagneten (90) umfassen, der die Absorptionszelle (7) umgibt und der derart versorgt wird, daß er ein amplitudenmoduliertes Magnetfeld erzeugt und dem durch das chemische Absorptionselement erzeugten Absorptionssignal erlaubt, dauerhaft im Verschiebungsbereich der Energieteilniveaus des chemischen Absorptionselements moduliert zu werden, damit das so ausgesendete Laserbündel nur einen spektralen Bestandteil mit einer Stabilisierungspräzision von nicht mehr als 2 MHz aufweist.

2. Laserquelle nach Anspruch 1 oder 2, **dadurch gekennzeichnet, daß** sie Mittel (8) zur optischen Ablenkung umfaßt, die es ermöglichen, das Bündel, welches die Absorptionszelle (7) durchquert, mindestens zwei Mal nacheinander durch die Absorptionszelle wandern zu lassen.

3. Laserquelle nach einem der Ansprüche 1 bis 3, **dadurch gekennzeichnet, daß** sie einen Generator (3) umfaßt, der es ermöglicht, ausgehend vom ersten durch den Festkörperlaser bereitgestellten Laserbündel ein zweites Laserbündel (4b), als N^{te} Oberschwingung bezeichnet, zu erzeugen, dessen Frequenz gleich N mal der Frequenz (f1) des ersten Laserbündels ist, wobei N eine ganze Zahl größer oder gleich 2 ist, wobei vorgesehen ist, daß die Absorptionszelle (7) durch die N^{te} Oberschwingung durchquert wird.

4. Laserquelle nach Anspruch 4, **dadurch gekennzeichnet, daß** der Oberschwingungsgenerator (3) einen nicht-linearen Kristall (30) auf der Basis von Kristallen PP:KTP umfaßt.

5. Laserquelle nach einem der Ansprüche 1 bis 5, **dadurch gekennzeichnet, daß** der Festkörperlaser (10) einen Hohlraum (102) aufweist, der durch einen Eingangsspiegel (101) und einen Ausgangsspiegel (102) begrenzt ist, und wobei im Inneren des Hohlraums ein Element aus einem aktiven Material (101) angeordnet ist, das dazu bestimmt ist, optisch gepumpt zu werden, und **dadurch**, daß die Länge des Hohlraums (102) mit Hilfe eines Elements (108) einstellbar ist, das durch die Regelungsmittel (9) gesteuert wird.

6. Laserquelle nach Anspruch 6, **dadurch gekennzeichnet, daß** das Element (108) zum Regeln der Länge des Hohlraums (102) ein piezoelektrischer Keil (108) ist.

7. Laserquelle nach einem der Ansprüche 1 bis 7, **dadurch gekennzeichnet, daß** der Festkörperlaser (10) einen Hohlraum (102) umfaßt, der durch einen Eingangsspiegel (103) und einen Ausgangsspiegel (104) begrenzt ist und wobei im Inneren des Hohlraums ein Element aus aktivem Material (101) angeordnet ist, das dazu bestimmt ist, optisch gepumpt zu werden, wobei der Eingangsspiegel (103) des Hohlraums (102) auf einer der Seiten des aktiven Elements (101) angeordnet ist und mit dem Ausgangsspiegel (104) einen plan-plan Hohlraum bildet und **dadurch**, daß der Festkörperlaser (10) Mittel zum Kühlen der Einheit aus Eingangsspiegel und Element aus aktivem Material umfaßt, wobei die Kühlmittel ermöglichen, den plan-plan Hohlraum stabil zu machen.

8. Laserquelle nach Anspruch 8, **dadurch gekennzeichnet, daß** die Kühlmittel ein Fenster (105) umfassen, das mit dem Eingangsspiegel (103) in Kontakt steht und aus einem transparenten Material in der Länge einer Pumpenwelle hergestellt ist und eine Wärmeleitfähigkeit aufweist, die über der Wärmeleitfähigkeit des aktiven Elements (101) liegt, so daß eine Streuung der erzeugten Wärmeenergie im Element aus aktivem Material (101) im Laufe des Pumpens ermöglicht wird.

9. Laserquelle nach Anspruch 9, **dadurch gekennzeichnet, daß** das Fenster (105) aus Saphir oder AIN ist.

10. Laserquelle nach Anspruch 9 oder 10, **dadurch gekennzeichnet, daß** die Kühlmittel einen Radiator (106) umfassen, der mit dem Fenster (105) in Kontakt steht und ermöglicht, die durch dieses Fenster (105) absorbierte Wärmeenergie während des Pumpens nach außen abzuführen.

11. Laserquelle nach einem der Ansprüche 1 bis 11, **dadurch gekennzeichnet, daß** der Festkörperlaser (10) einen Hohlraum (102) umfaßt, der durch einen Eingangsspiegel (103) und einen Ausgangsspiegel (104) begrenzt ist und in dessen Innerem ein Element aus aktivem Material (101) angeordnet ist, das dazu bestimmt ist, optisch gepumpt zu werden, und ein Pumpsystem (11, 112'), das ausgelegt ist, um ein Pumpenbündel (112a) zu erzeugen, das polarisiert ist und ein asymmetrisches Profil auf der Ebene aufweist, die zur Ausbreitungsrichtung des Bündels quer verläuft, wobei das Laserbündel (2), das aus dem Hohlraum (102) austritt, polarisiert ist, ohne daß im Hohlraum (102) ein Polarisierungselement zur Anwendung kommt.

12. Laserquelle nach einem der Ansprüche 1 bis 12, **dadurch gekennzeichnet, daß** der Festkörperlaser (10) ein Element aus aktivem Material (101) umfaßt, das dazu bestimmt ist optisch gepumpt zu werden, wobei das aktive Element (101) ein Glas oder ein mit Ytterbium-Erbium-Ionen co-dotierter Kristall ist.

13. Laserquelle nach einem der Ansprüche 1 bis 13, **dadurch gekennzeichnet, daß** der Festkörperlaser (10) das Aussenden eines ersten transversal und länglich Einmoden-Laserbündels (2) erlaubt.

14. Laserquelle nach Anspruch 14, **dadurch gekennzeichnet, daß** die Stärke des ersten Laserbündels (2) größer oder gleich 50 mW ist.

15. Laserquelle nach einem der Ansprüche 1 bis 15, **dadurch gekennzeichnet, daß** die Wellenlänge (λ1) des ersten Laserbündels (2) um 1,56 µm herum stabilisiert ist.

16. Laserquelle nach einem der Ansprüche 1 bis 16, **dadurch gekennzeichnet, daß** das chemische Absorptionselement aus der folgenden Gruppe ausgewählt ist: Rubidium, Kalium, Cäsium, Wasserstoff, Natrium, Lithium.

## Claims

1. A frequency-stabilized laser source, **characterised in that** it comprises:
- an optically-pumped solid state laser (10) enabling a first laser beam (2) to be emitted at frequency (f1),
- an absorption cell (7) containing an absorber chemical element, and which, in operation, has the first laser beam (2) or a beam (4b) derived therefrom passing therethrough in such a manner that a transition (T) of the absorber chemical element is saturated, and
- locking means (9) designed to lock the frequency (f1) of the first laser beam on said saturated transition (T) of the absorber chemical element, by means of synchronous detection based on modulating said transition (T),
- said locking means (9) comprising a solenoid (90) surrounding the absorption cell (7) and powered so as to create an amplitude-modulated magnetic field and enabling the absorption signal generated by said absorber chemical element to be continuously modulated over the shifting range of the energy sublevels of said absorber chemical element,
so that the thus emitted laser beam only comprises one spectral component with a stabilizing accuracy not exceeding 2 MHz.

2. A laser source according to claim 1 or claim 2, **characterised in that** it includes optical deflector means (8) enabling the beam that passes through the absorption cell (7) to pass through said absorption cell at least twice in succession.

3. A laser source according to one of claims 1 to 3, **characterised in that** it includes a generator (3) responsive to the first laser beam delivered by the solid state laser to generate an "N^{th} harmonic" second laser beam (4b) of frequency equal to N times the frequency (f1) of the first laser beam, where N is an integer greater than or equal to 2, the absorption cell (7) being placed so that said N^{th} harmonic passes therethrough.

4. A laser source according to claim 4, **characterised in that** the harmonic generator (3) comprises a non-linear crystal (30) based on PP:KTP crystals.

5. A laser source according to one of claims 1 to 5, **characterised in that** the solid state laser (10) has a cavity (102) which is defined by an entry mirror (101) and an exit mirror (102), within which there is positioned an element (101) made of active material designed to be pumped optically, and **in that** the length of the cavity (102) is adjustable by means of an element (108) which is controlled by the locking means (9).

6. A laser source according to claim 6, **characterised in that** the element (108) for adjusting the length of the cavity (102) is a piezoelectric spacer (108).

7. A laser source according to one of claims 1 to 7, **characterised in that** the solid state laser (10) having a cavity (102) which is defined by an entry mirror (103) and an exit mirror (104), and in which there is positioned an element (101) of active material that is designed to be optically pumped, the entry mirror (103) of said cavity (102) is placed on one of the faces of said active element (101) and co-operates with the exit mirror (104) to form a plane-plane cavity, and **in that** the solid state laser (10) includes means for cooling the assembly comprising the entry mirror and the element of active material, which cooling means enable said plane-plane cavity to be made stable.

8. A laser source according to claim 8, **characterised in that** the cooling means comprise a window (105) in contact with the entry mirror (103), and made of a material which is transparent to the pump wavelength and which presents thermal conductivity greater than the thermal conductivity of the active element (101), thereby enabling the heat energy generated in the active material element (101) during pumping to be dissipated.

9. A laser source according to claim 9, **characterised in that** the window (105) is made of sapphire or of AlN.

10. A laser source according to claim 9 or claim 10, **characterised in that** the cooling means comprise a radiator (106) which is in contact with the window (105) and which enables the heat energy absorbed by said window (105) during pumping to be evacuated to the outside.

11. A laser source according to one of claims 1 to 11, **characterised in that** the solid state laser (10) comprises a cavity (102) which is defined by an entry mirror (103) and an exit mirror (104), and within which there is positioned an element (101) of active material designed to be pumped optically, and a pump system (11, 112') designed to produce a pump beam (112a) which is polarized and which presents a profile that is asymmetrical in the plane extending transversely to the propagation direction of the beam, the laser beam (2) coming from the cavity (102) being polarized, without implementing a polarizing element inside the cavity (102).

12. A laser source according to one of claims 1 to 12, **characterised in that** the solid state laser (10) comprising an active material element (101) designed to be pumped optically, said active element (101) is a glass or a crystal co-doped with ions of ytterbium and erbium.

13. A laser source according to one of claims 1 to 13, **characterised in that** the solid state laser (10) enables a first longitudinal monomode and transverse monomode laser beam (2) to be emitted.

14. A laser source according to claim 14, **characterised in that** the power of the first laser beam (2) is greater than or equal to 50 mW.

15. A laser source according to one of claims 1 to 15, **characterised in that** the wavelength λ1) of the first laser beam (2) is stabilized around 1.56 µm.

16. A laser source according to one of claims 1 to 16, **characterised in that** the absorber chemical element is selected from the group: rubidium, potassium, cesium, hydrogen, sodium, lithium.
